# DEMANDE DE BREVET EUROPEEN

(11) **EP 4 760 553 A1**
(43) Date de publication de la demande: **17.06.2026**
(21) Numéro de dépôt: 24307077.8
(22) Date de dépôt: 11.12.2024
(51) Int. Cl.: G06F 21/16

(54) **PROCÉDÉ D'AUTHENTIFICATION DE PHOTOS ET VIDÉOS**

(71) Demandeur: BULL SAS, 78340 Les Clayes-Sous-Bois (FR)
(72) Inventeur: LE BRIS, MIKAEL, 35320 LE SEL DE BRETAGNE (FR)
(74) Mandataire: Novagraaf Technologies

(57) **Abrégé**

Un aspect de l'invention concerne un procédé d'authentification d'images comprenant :
- Envoyer, par un ordinateur à un serveur, une image à authentifier et une première clé unique précédemment obtenue auprès du serveur,
- Vérifier, par le serveur, l'authenticité de l'image à authentifier, à partir de la clé unique, de l'image à authentifier, et d'une image stockée par le serveur ayant été enregistrée lors de l'obtention de la clé unique,
- Recevoir du serveur une information d'authenticité de l'image à authentifier indiquant si l'image à authentifier est identique à l'image stockée par le serveur.

## Description

### DOMAINE TECHNIQUE DE L'INVENTION

Le domaine technique de l'invention est celui de l'authentification de données.

Le présent document concerne une méthode et un système d'authentification de photos et vidéos afin qu'un utilisateur puisse vérifier si une photo ou une vidéo a été modifiée après un enregistrement préalable.

### ARRIERE-PLAN TECHNOLOGIQUE DE L'INVENTION

Depuis plusieurs années, avec l'essor et les rapides progrès de l'intelligence Artificielle, un nouveau procédé nommé « Deepfake » a émergé. Ce procédé permet la génération de contenus visuels par intelligence artificielle (par exemple générative), permettant ainsi de mettre de vraies personnes dans des situations entièrement créées ou de leur faire dire des paroles qu'elles n'ont jamais prononcées. Pour cela, il est par exemple possible, avec les Deepfake, de modifier une vidéo existante en remplaçant le visage d'un être humain par le visage d'un autre. Il en est de même pour la voix, qu'il est possible de remplacer par la voix de quelqu'un d'autre.

Si ce procédé peut être utile pour la réalisation d'oeuvres cinématographiques, son utilisation avec des personnalités publiques, et en particulier des personnalités politiques, pose des problèmes significatifs. En effet, un tel procédé peut porter atteinte à la réputation de la personne, être source de désinformation ou même créer des incidents diplomatiques.

Pour lutter contre ces pratiques, plusieurs techniques ont été mises au point. Ces techniques utilisent souvent soit l'intelligence artificielle pour détecter des défauts dans les contenus produits, soit des dispositifs et procédés directement intégrés au matériel utilisé pour la capture des images.

Les solutions d'intelligence artificielle permettent par exemple aux utilisateurs de télécharger leurs vidéos pour vérifier leur authenticité. Les éditions effectuées sur la vidéo sont ensuite effectuées et un rapport est fourni avec les zones concernées. Par exemple, ces solutions peuvent détecter la limite de fusion des éléments deepfakes et fournir un score de confiance en retour. Cependant, le problème réside dans le fait que l'intelligence artificielle générative progresse rapidement et risque de combler les défauts à l'avenir. Cela rendra les détections par les techniques d'intelligence artificielle toujours plus compliquées, énergivores et moins fiables. De plus, ces solutions demandent souvent une action manuelle de l'utilisateur pour télécharger les fichiers suspects, ce qui suppose que l'utilisateur a déjà un doute sur le contenu.

Concernant les solutions matérielles, la plupart de ces solutions sont basées sur l'insertion de métadonnées cryptographiques à la création ou la modification des images. Cela permet de taguer les images comme étant générées ou modifiées par intelligence artificielle, et d'en effectuer le suivi des modifications. Un problème qui intervient est que les solutions doivent être mises en oeuvre à grande échelle sur les matériels, ce qui nécessite des collaborations entre éditeurs et fabricants et est complexe à mettre en oeuvre. En effet, les collaborations peuvent être longues à mettre en place et peuvent engendrer des situations de dépendances entre les acteurs.

Il existe donc un besoin de proposer une solution ne présentant pas ou limitant les problèmes de l'art antérieur.

### RESUME DE L'INVENTION

L'invention offre une solution aux problèmes évoqués précédemment, en permettant

Un aspect de l'invention concerne un procédé d'authentification d'images comprenant :
- Envoyer, par un ordinateur à un serveur, une image à authentifier et une première clé unique précédemment obtenue auprès du serveur,
- Vérifier, par le serveur, l'authenticité de l'image à authentifier, à partir de la clé unique, de l'image à authentifier, et d'une image stockée par le serveur ayant été enregistrée lors de l'obtention de la clé unique,
- Recevoir du serveur une information d'authenticité de l'image à authentifier indiquant si l'image à authentifier est identique à l'image stockée par le serveur.

L'invention permet de vérifier l'authenticité d'un média (image ou vidéo) en envoyant le média et une clé unique précédemment obtenue à un serveur. Le serveur vérifie ensuite l'authenticité en comparant le média et la clé reçues avec un média et une clé stockée. Cela garantit que toute modification de l'image après son enregistrement initial peut être détectée. En utilisant une clé unique liée à la fois au média et à l'utilisateur, le procédé fournit un mécanisme robuste pour vérifier l'intégrité du média.

De plus, le procédé simplifie l'expérience utilisateur en automatisant le processus de vérification, éliminant ainsi le besoin d'intervention manuelle et réduisant le potentiel d'erreur utilisateur. Cela est particulièrement bénéfique dans les scénarios où l'authenticité des médias est cruciale, tels que dans les contextes des réseaux sociaux, dans les contextes journalistiques ou de sécurité.

Outre les caractéristiques qui viennent d'être évoquées dans le paragraphe précédent, le procédé d'authentification selon un aspect de l'invention peut présenter une ou plusieurs caractéristiques complémentaires parmi les suivantes, considérées individuellement ou selon toutes les combinaisons techniquement possibles :
- Le procédé comprend préalablement :
   - Enregistrer l'image auprès du serveur, par un utilisateur de l'ordinateur, l'enregistrement comprenant :
      - Envoyer, par l'ordinateur, l'image au serveur,
      - Stocker, par le serveur, l'image envoyée,
      - Calculer et stocker, par le serveur, la première clé unique, la première clé unique dépendant d'une information liée à l'image et d'une information liée à l'utilisateur de l'ordinateur,
      - Recevoir du serveur, par l'ordinateur, la première clé unique.
- l'étape de vérifier l'authenticité de l'image à authentifier comprend :
   - Calculer, par le serveur, une deuxième clé unique dépendant d'une information liée à l'image à authentifier et d'une information liée à l'utilisateur de l'ordinateur,
   - Comparer la première clé unique et la deuxième clé unique,
   - Comparer l'image stockée par le serveur et l'image à authentifier et,
   - si la première clé unique et la deuxième clé unique sont identiques et l'image stockée et l'image à authentifier sont identiques, envoi par le serveur de l'information d'authenticité indiquant que la deuxième image est identique à la première image,
   - si la première clé unique et de la deuxième clé unique sont différentes et/ou l'image stockée et l'image à authentifier sont différentes, envoi par le serveur de l'information d'authenticité indiquant que la deuxième image est différente à la première image.
- la première clé unique et la deuxième clé unique sont calculées par le serveur en utilisant une même fonction de calcul, la fonction de calcul prenant en entrée le résultat d'une fonction de hachage appliquée à une image et une information de l'utilisateur, et fournissant en sortie une clé.
- le procédé est appliqué à une pluralité d'images constituant une vidéo enregistrée auprès du serveur puis authentifiée.
- la vidéo comprend une bande audio, et selon lequel comparer la vidéo stockée par le serveur et la vidéo à authentifier comprend comparer la bande audio de la vidéo stockée par le serveur et la bande audio de la vidéo à authentifier.
- la vidéo à authentifier comprend une pluralité de vidéos enregistrées séparément auprès du serveur et selon lequel vérifier l'authenticité de la vidéo à authentifier par le serveur est réitéré pour chaque vidéo de la pluralité de vidéos.
- Le procédé comprend, après réception de la première clé unique, une étape de stockage de la première clé unique dans la vidéo.
- la première clé publique est stockée dans un champ « udta » de la vidéo au format MPEG-4 Part 14.

Un autre aspect de l'invention concerne un système configuré pour mettre en oeuvre le procédé selon l'invention, le système comprenant :
- L'ordinateur et
- Le serveur.

Dans une variante, l'ordinateur met en oeuvre un site web configuré pour accéder au serveur via une interface de programmation d'application. Le site web peut être configuré pour publier l'image enregistrée auprès du serveur avec la première clé unique qui lui est associée. Le site web peut aussi être configuré pour mettre en oeuvre le procédé avant de publier une image ou une vidéo, et le site web peut être configuré pour publier l'information d'authenticité reçue du serveur avec l'image ou la vidéo.

Un autre aspect de l'invention concerne un produit programme d'ordinateur comprenant des instructions qui, lorsque le programme est exécuté par un ordinateur, mènent l'ordinateur à mettre en oeuvre le procédé selon l'invention.

Un autre aspect de l'invention concerne un support lisible par ordinateur sur lequel est stocké le produit programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un procédé selon l'invention,
- La figure 2 montre une représentation schématique d'un système pour mettre en oeuvre le procédé selon l'invention,
- La figure 3 montre une représentation schématique d'une première phase du procédé selon l'invention,
- La figure 4 montre une représentation schématique d'une deuxième phase du procédé selon un premier mode de réalisation de l'invention,
- La figure 5 montre une représentation schématique d'une deuxième phase du procédé selon un deuxième mode de réalisation de l'invention,
- La figure 6 montre une représentation schématique d'un exemple de réalisation du procédé selon l'invention par un site web.

### DESCRIPTION DETAILLEE

Sauf précision contraire, un même élément apparaissant sur des figures différentes présente une référence unique.

L'invention porte sur un procédé et un système d'authentification d'image, permettant l'authentification d'image auprès d'un serveur, après enregistrement de l'image auprès du serveur. L'invention s'applique aussi à une pluralité d'images, qui peuvent être authentifiée indépendamment les unes des autres, ou par groupe d'images, ou encore lorsque la pluralité d'images forme une vidéo, l'invention permettant alors d'authentifier la vidéo.

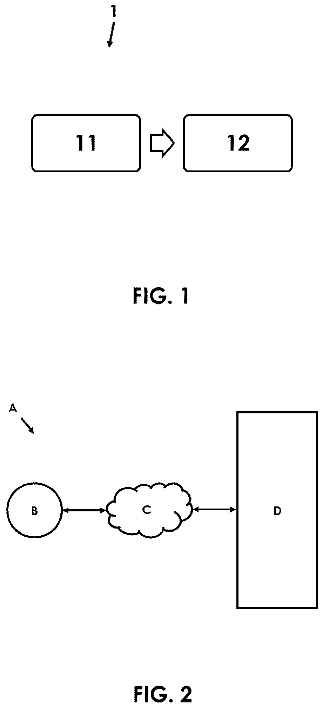

Pour cela, l'invention porte notamment sur un procédé 1 représenté à la Figure 1. Ce procédé 1 comprend une première phase d'enregistrement 11 de la ou des images ou de la vidéo auprès du serveur, puis une deuxième phase 12 de vérification de l'authenticité de la ou des images ou de la vidéo préalablement enregistrée(s) auprès du serveur. L'invention n'est nullement limitée aux modes de réalisation décrits ci-après. Notamment, l'invention permet d'authentifier une image, plusieurs images, une vidéo et/ou plusieurs vidéos.

Le procédé 1 peut être mis en oeuvre par un système A représenté schématiquement à la Figure 2. Le système A comprend un ordinateur B relié à un serveur D via un réseau C. Le réseau C est par exemple un réseau selon la suite de protocoles internet. Bien entendu, le serveur D est aussi un ordinateur. Le serveur D est nommé « serveur » car il est configuré pour recevoir une requête de l'ordinateur A et pour y répondre. Pour cela, le serveur D peut par exemple comprendre une interface de programmation applicative, aussi appelée « API » pour « Application Programming Interface », qui permet à un ordinateur via un programme mis en oeuvre par l'ordinateur d'interagir avec le serveur D. L'invention couvre aussi toute autre façon d'interagir avec le serveur D.

On entend par « ordinateur » un dispositif physique comprenant au moins un processeur et une mémoire, configuré pour mettre en oeuvre un procédé. Un ordinateur est « configuré pour mettre en oeuvre un procédé » lorsque la mémoire de l'ordinateur stocke des instructions qui, lorsqu'elles sont exécutées par le processeur de l'ordinateur, conduisent le processeur et donc l'ordinateur à mettre en oeuvre le procédé. De la même manière, le serveur D est un ordinateur, et est donc un dispositif physique.

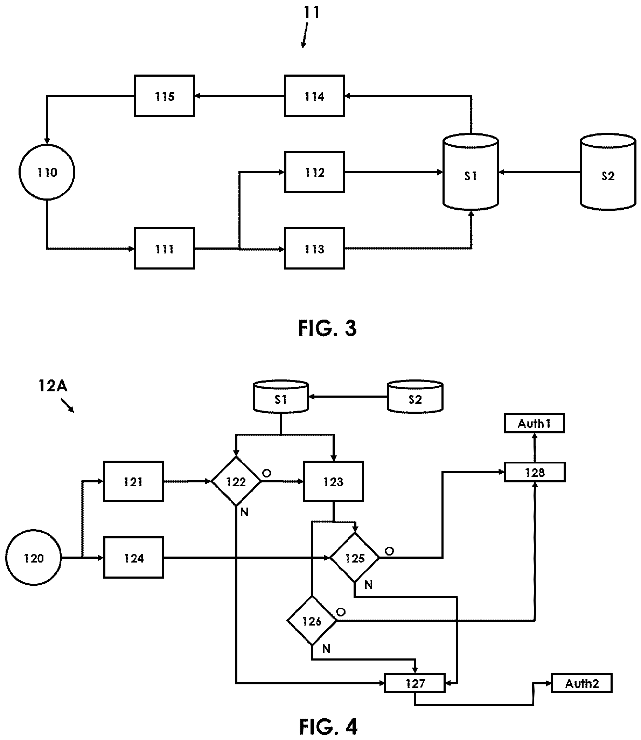

Le procédé 1 comprend une première phase d'enregistrement 11. Un mode de réalisation de la première phase d'enregistrement 11 est représenté schématiquement à la Figure 3. Dans ce mode de réalisation, l'exemple d'une image sera pris, mais l'invention n'est pas limitée à l'enregistrement d'une image, et peut s'appliquer de la même manière à l'enregistrement d'une vidéo, d'une pluralité d'images en un seul enregistrement ou en réitérant l'enregistrement pour chaque image de la pluralité d'images, ou d'une pluralité de vidéos en un seul enregistrement ou en réitérant l'enregistrement pour chaque vidéo de la pluralité de vidéos.

La phase d'enregistrement 11 permet au serveur D d'avoir connaissance du média à authentifier plus tard, en le stockant, et d'avoir connaissance de l'utilisateur associé à ce média.

Ainsi, la phase d'enregistrement 11 comprend une première étape 110 de connexion de l'utilisateur U au serveur D via l'ordinateur B. Par exemple, l'utilisateur U peut se connecter au serveur D via une interface de connexion, par exemple via un ensemble identifiant/mot de passe. L'ordinateur B peut être autonome, et se connecter au serveur D via un programme, avec des identifiants de connexion de l'utilisateur U qu'il stocke.

Une fois l'utilisateur U connecté au serveur, c'est-à-dire authentifié auprès du serveur D en tant qu'utilisateur du procédé d'authentification d'images et/ou de vidéos, la phase d'enregistrement 11 comprend une étape 111 d'envoi, par l'ordinateur B, d'une image authentique au serveur D. Cet envoi est réalisé via le réseau C. L'image envoyée est une image authentique. On entend par « image authentique » une image à enregistrer par le serveur D, qui servira de base à l'authentification d'une image ultérieure lors de la phase d'authentification. L'image ultérieure à authentifier est alors comparée à l'image authentique et il sera vérifié si l'image ultérieure est identique à l'image enregistrée. Autrement dit, la vérification de l'authenticité d'une image ultérieure comprend la vérification que l'image ultérieure n'est pas le résultat d'une altération de l'image authentique.

L'image authentique envoyée à l'étape 111 est ensuite stockée, par le serveur D, dans une mémoire S1 à une étape 112. Cette mémoire S1 est par exemple une mémoire morte, par exemple interne du serveur D, ou est accessible par le serveur D via un réseau.

La phase d'enregistrement 11 comprend ensuite une étape 113 de calcul et de stockage, par le serveur D, d'une clé unique, la clé unique dépendant d'une information liée à l'image authentique et d'une information liée à l'utilisateur U de l'ordinateur B ayant soumis l'image authentique. Il est représenté à la Figure 3 que la clé unique ainsi générée est stockée dans la mémoire S1, mais la clé unique peut aussi être stockée dans toute autre mémoire.

Pour générer la clé unique, le serveur D utilise son processeur et calcule le résultat d'une fonction de calcul prenant en entrée une information liée à l'image authentique et une information liée à l'utilisateur U ayant soumis l'image authentique. Par exemple, la fonction de calcul peut être une simple concaténation des deux informations. Pour obtenir l'information liée à l'utilisateur U, le processeur peut accéder à une mémoire S2 stockant des informations sur les utilisateurs du procédé d'authentification d'images et/ou de vidéos. Une possibilité est aussi que la mémoire S1 et la mémoire S2 soient confondues. L'information liée à l'image est le résultat d'une fonction de hachage appliquée à l'image authentique.

Pour calculer l'information liée à l'image, la fonction de hachage est par exemple une fonction de type MD5 (« Message Digest Algorithm 5 »), SHA (« Secure Hash Algorithm »), BLAKE, CRC (Code de Redondance Cyclique) ou toute autre fonction de hachage connue.

La fonction de hachage prend en entrée l'image authentique.. Préférentiellement, l'image authentique entière est fournie en entrée de la fonction de hachage.

Par ailleurs, la fonction de calcul prend en entrée une information liée à l'utilisateur U, par exemple un identifiant unique de l'utilisateur U.

La clé unique est donc une concaténation de l'image hachée et d'une information liée à l'utilisateur. Cette clé unique est ensuite stockée par le serveur D.

Une fois la clé unique calculée par le serveur D, elle est chiffrée lors d'une étape 114, ce qui permet d'obtenir une clé unique signée, puis transmise à l'ordinateur B lors d'une étape 115, où elle est donc reçue par l'ordinateur B. L'utilisateur U dispose alors de la clé unique chiffrée et peut la joindre à son image authentique, et partager l'image authentique avec sa clé unique chiffrée. Le chiffrement de la clé unique peut être effectué de toute manière connue de l'homme du métier, par exemple par un chiffrement asymétrique, par un chiffrement symétrique, par AES (« Advanced Encryption Standard »), ou en utilisant tout autre procédé de chiffrement connu.

La clé unique chiffrée peut être jointe au contenu par exemple en l'insérant dans le champ « udta » de la vidéo au format MPEG-4 Part 14, lorsque le contenu authentique est une vidéo.

Une fois la phase d'enregistrement 11 réalisée, le procédé 1 comprend une phase d'authentification 12. La phase d'enregistrement 11 doit être mise en oeuvre pour chaque image et/ou vidéo authentique qui fera l'objet d'une authentification 12 plus tard auprès du serveur D. La phase d'authentification 12 peut être mis en oeuvre par un ordinateur différent de l'ordinateur B à l'origine de la phase d'enregistrement 11, ou peut être le même ordinateur B. Pour mettre en oeuvre une phase d'authentification 12 pour une image donnée à authentifier, il est nécessaire que la version « authentique » de cette image ait été enregistrée lors d'une phase d'enregistrement 11 auprès du serveur D. La « version authentique » d'une image à authentifier est l'image enregistrée auprès du serveur qui servira de base de comparaison pour vérifier si l'image à authentifier est bien l'image authentique ou si l'image à authentifier a été altérée ou est différente de l'image authentique.

La Figure 4 montre une représentation schématique d'un premier mode de réalisation 12A de la phase d'authentification 12, dans lequel une image est authentifiée.

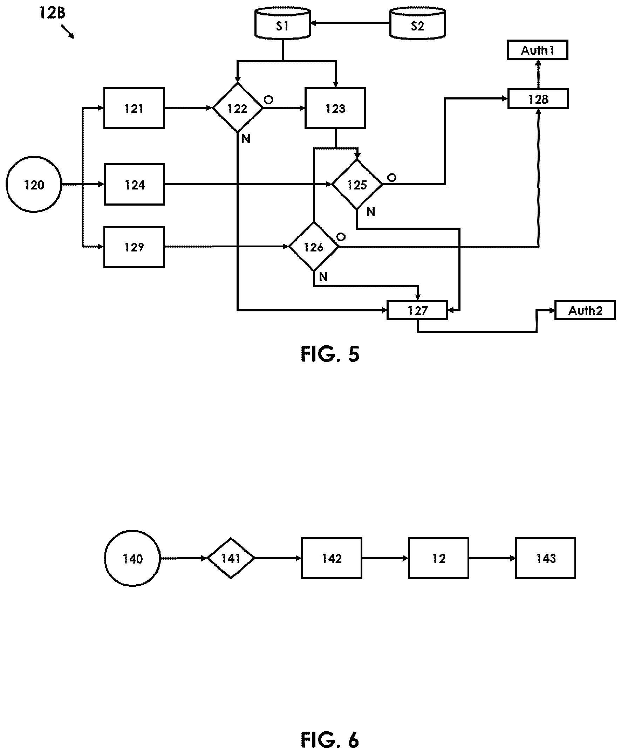

La Figure 5 montre une représentation schématique d'un deuxième mode de réalisation 12B de la phase d'authentification 12, dans lequel une vidéo est authentifiée.

Le premier mode de réalisation de la phase d'authentification 12A comprend l'envoi à une étape 120, par un ordinateur (par exemple l'ordinateur B), d'une image à authentifier et d'une clé unique chiffrée de l'image authentique associée à l'image à authentifier. En d'autres termes, l'utilisateur U cherche à savoir si l'image à authentifier est bien l'image authentique associée à la clé unique chiffrée qu'il joint à l'image à authentifier. Cette clé unique chiffrée envoyée à l'étape 120 est une clé unique chiffrée reçue du serveur D lors de la phase d'enregistrement 11 de l'image authentique associée à l'image à authentifier.

Cet envoi à l'étape 120 peut par exemple être réalisé en utilisant une interface de programmation application (API) du serveur D.

Après envoi de l'image à authentifier et de la clé unique chiffré, il est procédé à la vérification, par le serveur D, de l'authenticité de l'image à authentifier, à partir de la clé unique chiffré, de l'image à authentifier, et de l'image authentique stockée par le serveur D retrouvée à partir de la clé unique chiffrée.

Pour réaliser cette vérification de l'authenticité, la clé unique chiffrée est déchiffrée, à une étape 121, par le serveur D, en utilisant un procédé de déchiffrement permettant de déchiffrer un contenu chiffré par le procédé de chiffrement utilisé lors de la phase d'enregistrement 11.

Une fois la clé unique déchiffrée, il est vérifié par le serveur D si cette clé existe, c'est-à-dire, si cette clé peut être accédée en mémoire par le serveur D. Il est donc recherché, par le serveur D, à une étape 122, si cette clé unique reçue correspond à une clé stockée par le serveur D en mémoire S1 ou accessible par le serveur D en mémoire S1. Si cette clé existe (« O » à la Figure 4), une étape 123 est ensuite réalisée. Si cette clé n'existe pas (« N » à la Figure 4), une étape 127 est ensuite réalisée.

L'étape 123 est une étape de récupération de la clé unique stockée dans la mémoire S1 et de l'image authentique stockée dans la mémoire S1, correspondant à la clé unique jointe à l'image à authentifier envoyée à l'étape 120. Lors de l'étape 123, le résultat de la fonction de hachage compris dans la clé unique est extrait de la clé unique, et sera utilisé à l'étape 125, comme décrit plus tard.

Lors d'une étape 124, à partir de l'image à authentifier envoyée à l'étape 120, un nouveau résultat de fonction de hachage est calculé par le serveur D. Ainsi, l'image à authentifier est hachée avec la même fonction de hachage que celle utilisée à l'étape 113 de la phase d'enregistrement 11.

L'étape 125 est donc une étape de comparaison des résultats des fonctions de hachage appliquées respectivement à l'image à authentifier et à l'image authentique, le résultat de la fonction de hachage appliquée à l'image à authentifier provenant de l'étape 124 et le résultat de la fonction de hachage appliquée à l'image authentique provenant de l'étape 123. Comparer les résultats des fonctions de hachage permet de comparer les images en tant que telles, et donc de vérifier si leur contenu (par exemple, les données numériques qui les composent représentant chaque pixel) sont identiques. A l'étape 125, il est donc vérifié si les résultats des fonctions de hachage sont égaux. Si c'est le cas (« O » à la Figure 4), une étape 128 est réalisée. Si ce n'est pas le cas (« N » à la Figure 4), une étape 127 est réalisée.

A une étape 126, l'image authentique récupérée à l'étape 123 est comparée à l'image à authentifier. Une telle comparaison peut être une comparaison pixel à pixel, ou une comparaison réalisée par apprentissage automatique, par exemple par un apprentissage profond tel qu'un réseau de neurones. Ainsi, il est vérifié si les images sont identiques et, si c'est le cas (« O » à la Figure 4), une étape 128 est réalisée. Si ce n'est pas le cas (« N » à la Figure 4), une étape 127 est réalisée.

et cette information d'authenticité est envoyée par le serveur D à l'ordinateur ayant réalisé l'étape d'envoi 120. Si ce n'est pas le cas (« N » à la Figure 4), une étape 127 est réalisée.

il est considéré que l'image à authentifier est authentique (« Auth1 »), et cette information d'authenticité est envoyée par le serveur D à l'ordinateur ayant réalisé l'étape d'envoi 120.

L'étape 127 est un opérateur « OU », recevant l'information de non-existence de la clé unique dans la mémoire S1, l'information de non-égalité des résultats des fonctions de hachage appliquées à l'image à authentifier et à l'image authentique, et l'information de non-égalité des images à authentifier et authentique. Si l'une de ces trois informations est vraie, il est considéré que l'image à authentifier n'est pas authentique (« Auth2 »), et cette information de non-authenticité est envoyée par le serveur D à l'ordinateur ayant réalisé l'étape d'envoi 120.

L'étape 128 est un opérateur « ET », recevant l'information d'existence de la clé unique dans la mémoire S1, l'information d'égalité des résultats des fonctions de hachage appliquées à l'image à authentifier et à l'image authentique, et l'information d'égalité des images à authentifier et authentique. Si ces trois informations sont vraies, il est considéré que l'image à authentifier est authentique (« Auth1 »), et cette information d'authenticité est envoyée par le serveur D à l'ordinateur ayant réalisé l'étape d'envoi 120.

Ainsi, le seul cas qui permet d'obtenir une authentification vérifiée « Auth1 » est le cas dans lequel :
- la clé unique est retrouvée dans la mémoire S1 et
- les résultats des fonctions de hachage appliquée à l'image à authentifier et à l'image authentique sont égaux et
- les images sont identiques.

Une authentification vérifiée correspond donc à l'information que l'image à authentifier est identique à l'image authentique stockée par le serveur.

Dans un deuxième mode de réalisation 12B représenté schématiquement à la Figure 5, une vidéo est authentifiée, tandis que dans le premier mode de réalisation 12A, une image était authentifiée.

Le deuxième mode de réalisation 12B comprend les mêmes étapes 121 à 128 que le premier mode de réalisation 12A, et comprend une étape supplémentaire 129. En effet, dans le cas de l'authentification d'une vidéo, les mêmes étapes de vérification de l'existence de la clé unique dans la mémoire S1 et de comparaison des résultats des fonctions de hachage appliquées à la vidéo à authentifier et à la vidéo authentique sont réalisées.

La différence entre une image et la vidéo est que la vidéo peut contenir une bande sonore. Ainsi, la phase d'authentification comprend alors une extraction de la bande sonore de la vidéo à authentifier lors d'une étape 129, et la comparaison de la bande sonore de la vidéo à authentifier et de la bande sonore de la vidéo authentique stockée par la mémoire S1 est réalisée, en plus de la comparaison des images de la vidéo, à l'étape 126. La bande sonore de la vidéo authentique est extraite par exemple lors de l'étape 123 de récupération de la vidéo depuis la mémoire S et de la clé unique depuis la mémoire S1.

L'invention peut en outre être mise en oeuvre pour des vidéos qui contiennent une pluralité de vidéos et/ou d'images à authentifier. Dans un tel cas, il peut être prévu que le serveur D est configuré pour extraire de la vidéo les différentes composantes à authentifier, et pour réaliser la phase d'authentification 12 pour chaque composante de la vidéo. Par exemple, une vidéo comprenant plusieurs vidéos et/ou images à authentifier peut être envoyée lors de l'étape 120 avec l'ensemble des clés uniques associées aux composantes de la vidéo à authentifier, par exemple en découpant la vidéo en intervalles temporels, chaque intervalle temporel correspondant à une composante de la vidéo à authentifier et étant associé à une clé unique. La phase d'authentification est alors réalisée pour chaque composante sur chaque intervalle de temps, et une information d'authentification peut être fournie par le serveur D pour chaque composante, ou pour l'ensemble de la vidéo, si toutes les composantes sont authentiques.

Dans un mode de réalisation particulier de l'invention représenté à la Figure 6, compatible avec les modes de réalisation précédents, l'ordinateur B met en oeuvre un site web, par exemple un réseau social ou un site web de contenu multimédia, et gère automatiquement l'authenticité du contenu qui est partagé sur ce site web. Pour cela, un procédé 14 représenté à la Figure 6 est mis en oeuvre.

Tout d'abord, à une étape 140, un utilisateur du site web télécharge un nouveau média sur le site web, c'est-à-dire une image ou une vidéo.

Le site web est ensuite configuré pour vérifier, à une étape 141, si une clé unique chiffrée est jointe au contenu. Si c'est le cas, le site web est configuré pour réaliser une étape 142 de demande, au serveur D, de vérification de l'authenticité du média téléchargé, en joignant la clé unique chiffrée. Le serveur D réalise alors la phase d'authentification 12, par exemple selon le mode de réalisation 12A si le média est une image ou selon le mode de réalisation 12B si le média est une vidéo.

Lors d'une étape 143, le site web reçoit l'information d'authenticité du média et l'affiche conjointement au média lorsqu'il est publié sur le site web. Cela permet notamment d'avertir les utilisateurs du site web de l'authenticité du média affiché, et donc de résoudre le problème technique de la vérification de l'authenticité de médias.

Lors d'une republication du média par un utilisateur du site web, il est par ailleurs possible, pour le site web, de vérifier si une information d'authenticité du contenu a déjà été obtenue et de réaliser le procédé 14 si ce n'est pas le cas. Si une information d'authenticité du contenu a déjà été obtenue, cette information est affichée conjointement au contenu sur la republication du média par l'utilisateur.

## Revendications

1. Procédé (1) d'authentification d'images comprenant :
- Envoyer, par un ordinateur (B) à un serveur (D), une image à authentifier et une première clé unique précédemment obtenue auprès du serveur (D),
- Vérifier, par le serveur (D), l'authenticité de l'image à authentifier, à partir de la clé unique, de l'image à authentifier, et d'une image stockée par le serveur (D) ayant été enregistrée lors de l'obtention de la clé unique,
- Recevoir du serveur (D) une information d'authenticité de l'image à authentifier indiquant si l'image à authentifier est identique à l'image stockée par le serveur (D).

2. Procédé (1) selon la revendication 1 comprenant préalablement :
- Enregistrer (11) l'image auprès du serveur (D), par un utilisateur de l'ordinateur (B), l'enregistrement (11) comprenant :
∘ Envoyer (111), par l'ordinateur (B), l'image au serveur (D),
∘ Stocker (112), par le serveur (D), l'image envoyée,
∘ Calculer (113) et stocker (114), par le serveur (D), la première clé unique, la première clé unique dépendant d'une information liée à l'image et d'une information liée à l'utilisateur de l'ordinateur (B),
∘ Recevoir du serveur (D), par l'ordinateur (B), la première clé unique.

3. Procédé (1) selon la revendication 2 selon lequel l'étape de vérifier (12,12A,12B) l'authenticité de l'image à authentifier comprend :
- Calculer (124), par le serveur (D), une deuxième clé unique dépendant d'une information liée à l'image à authentifier et d'une information liée à l'utilisateur de l'ordinateur (B),
- Comparer (125) la première clé unique et la deuxième clé unique,
- Comparer (126) l'image stockée par le serveur (D) et l'image à authentifier et,
∘ si la première clé unique et la deuxième clé unique sont identiques et l'image stockée et l'image à authentifier sont identiques, envoi (Auth1) par le serveur (D) de l'information d'authenticité indiquant que la deuxième image est identique à la première image,
∘ si la première clé unique et de la deuxième clé unique sont différentes et/ou l'image stockée et l'image à authentifier sont différentes, envoi (Auth2) par le serveur (D) de l'information d'authenticité indiquant que la deuxième image est différente à la première image.

4. Procédé (1) selon l'une des revendications précédentes selon lequel la première clé unique et la deuxième clé unique sont calculées par le serveur (D) en utilisant une même fonction de calcul, la fonction de calcul prenant en entrée le résultat d'une fonction de hachage appliquée à une image et une information de l'utilisateur, et fournissant en sortie une clé.

5. Procédé (1) selon l'une des revendications précédentes selon lequel le procédé (1) est appliqué à une pluralité d'images constituant une vidéo enregistrée (11) auprès du serveur (D) puis authentifiée (12B).

6. Procédé (1) selon la revendication 5 selon lequel la vidéo comprend une piste audio, et selon lequel comparer (126) la vidéo stockée par le serveur (D) et la vidéo à authentifier comprend comparer la piste audio de la vidéo stockée par le serveur (D) et la piste audio de la vidéo à authentifier.

7. Procédé (1) selon l'une des revendications 5 ou 6 selon lequel la vidéo à authentifier comprend une pluralité de vidéos enregistrées séparément auprès du serveur (D) et selon lequel vérifier l'authenticité de la vidéo à authentifier par le serveur (D) est réitéré pour chaque vidéo de la pluralité de vidéos.

8. Procédé (1) selon l'une des revendications 5 à 7 comprenant, après réception de la première clé unique, une étape de stockage de la première clé unique dans la vidéo.

9. Procédé (1) selon la revendication 8 selon lequel la première clé unique est stockée dans un champ « udta » de la vidéo au format MPEG-4 Part 14.

10. Système (A) configuré pour mettre en oeuvre le procédé (1) selon l'une des revendications précédentes, le système (A) comprenant :
- L'ordinateur (B) et
- Le serveur (D).

11. Système (A) selon la revendication 10 selon lequel l'ordinateur (B) met en oeuvre un site web configuré pour accéder au serveur (D) via une interface de programmation d'application.

12. Système (A) selon l'une des revendications 10 ou 11 selon lequel le site web est configuré pour publier l'image enregistrée auprès du serveur (D) avec la première clé unique qui lui est associée.

13. Système (A) selon l'une des revendications 10 à 12 selon lequel le site web est configuré pour mettre en oeuvre le procédé (1) avant de publier une image ou une vidéo, et dans lequel le site web est configuré pour publier l'information d'authenticité reçue du serveur (D) avec l'image ou la vidéo.

14. Produit programme d'ordinateur comprenant des instructions qui ,lorsque le programme est exécuté par un ordinateur, mènent l'ordinateur à mettre en oeuvre le procédé (1) selon l'une quelconque des revendications 1 à 9.

15. Support lisible par ordinateur sur lequel est stocké le produit programme d'ordinateur selon la revendication 14.
